# EUROPEAN PATENT SPECIFICATION

(11) **EP 0 713 641 B1**
(45) Date of publication and mention of the grant of the patent: **17.05.2000**
(21) Application number: 95203114.4
(22) Date of filing: 15.11.1995
(51) Int. Cl.: A01J 5/017, A01J 5/013, A01J 5/007

(54) **A method of automatically milking animals and an implement for applying same**
Verfahren zum automatischen Melken von Tieren und Vorrichtung zu deren Anwendung
Méthode de traite automatique d'animaux et dispositif pour sa mise en oeuvre

(30) Priority: 22.11.1994 NL 9401942
(43) Date of publication of application: 29.05.1996
(73) Proprietor: MAASLAND N.V., 3155 PD Maasland (NL)
(72) Inventor: Van den Berg, Karel, NL-2971 BR Bleskensgraaf (NL)
(74) Representative: Corten, Maurice Jean F.M.

(56) References cited:
- EP-A- 0 534 564
- EP-A- 0 576 086

## Description

The present invention relates to a method of automatically milking animals, such as cows, using a milking robot for automatically connecting teat cups to the teats of an animal, respectively disconnecting same therefrom, and a milking implement by means of which the milk obtained via the teat cups is discharged to a milk tank, which method furthermore implies the use of sensors for monitoring the milking process and/or the quality of the milk and/or the health condition of the animals.

A similar method is known from Dutch patent application no. 9101636. A problem arises when one or more of these sensors becomes/become defective. Therefore, the method according to the invention is characterized in that for the signals supplied by one or more of these sensors or for further signals deduced from a combination thereof, there is defined an average value over a fixed number of animals and/or over a fixed period of time, and in that, when, upon milking an animal, one of the said signals obtained has a value that deviates to some extent from the corresponding average value, the sensor/sensors supplying such a signal is/are regarded as being defective. This defectiveness of one or more sensors can be indicated via an attention list to be provided by the computer system used upon application of the method or via an other kind of alarm, such as check lights to be provided on the installation. In particular, defectiveness of some specific sensors should not result in the system getting out of order. Therefore, the method is furthermore characterized in that when, upon milking an animal, one of the said signals obtained has a value that deviates to some extent from the corresponding average value, the automatic milking of the animals continues to be effected.

Insofar as the sensors operate individually, the signals supplied thereby are capable of indicating the underpressure in one or more teat cups or in lines connected thereto, and/or the milk temperature, and/or the conductivity of the milk, and/or the start and the end of the milk flow. Besides, the further signals deduced from a combination of signals supplied by the sensors are capable of indicating the dead time, i.e. the time elapsed between the moment of connection of a teat cup and the moment of start of the milk flow, and/or the milking time, and/or the milking rate, and/or the milk yield. Therefore, as sensors there can be used vacuum sensors for detecting an underpressure in the teat cups and in the milk lines connected thereto, temperature sensors for recording the milk temperature, conductivity sensors for diagnosing mastitis or other infective diseases, and flow sensors for ascertaining the start and the end of a milk flow.

For a better understanding of the invention and to show how the same may be carried into effect, reference will now be made, by way of example, to the accompanying drawings, in which:
Figure 1 shows schematically an arrangement of a milking implement according to the invention, and
Figure 2 shows in detail a teat cup.

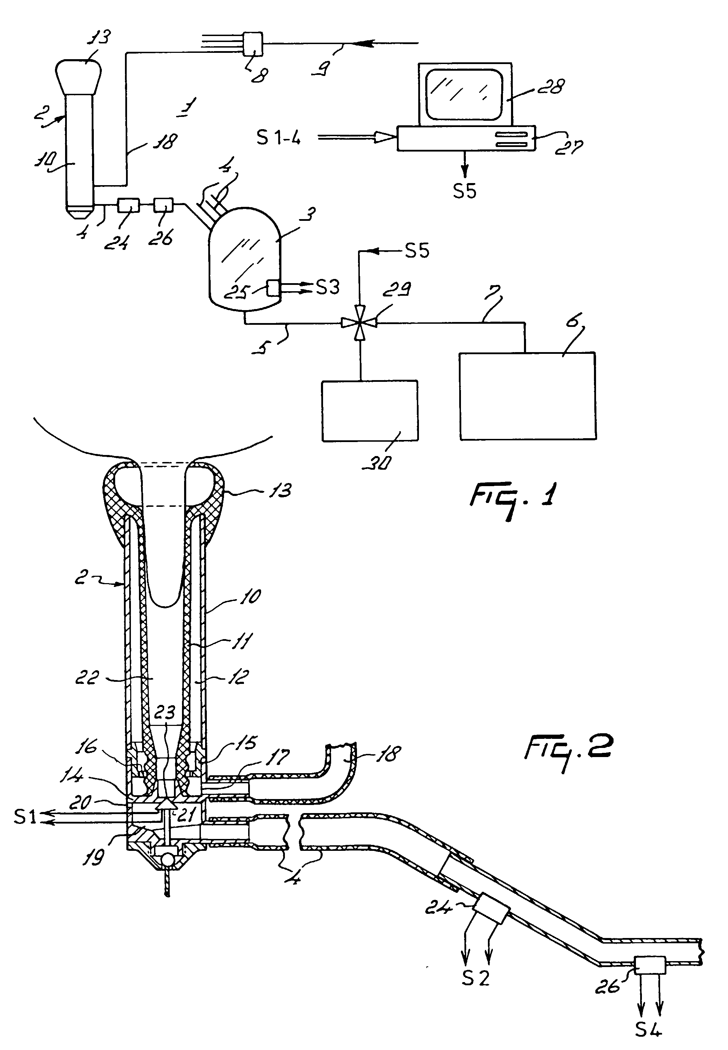

Figure 1 shows a milking installation 1 for an implement for automatically milking animals, in which, for the sake of simplicity, only one teat cup 2 is represented. With the aid of a (non-shown) milking robot, the teat cups 2 can automatically be connected to the teats of an animal, respectively be disconnected therefrom. The milk obtained per udder quarter by means of the teat cups 2 can be supplied through separate milk lines 4 to a milk quantity measuring meter or milk glass 3. The discharge line 5 from the milk glass 3 is connected to a line 7 extending to the milk tank 6. Furthermore, the milking installation includes, insofar as relevant to the present invention, a pulsator system 8 for the four teat cups 2. The vacuum line 9 for the pulsator system 8 is connected, in a customary manner, to a vacuum pump having a balance tank.

Figure 2 shows a longitudinal cross-section of a teat cup 2, which is constructed, in a customary manner, from a rigid, e.g. metal, sleeve 10 having thereinside an inner wall 11 made of a flexible material, e.g. rubber, and a rubber cap 13 which closes off, at its upper end, the space 12 therebetween and the inner wall 11. At the lower end, the space between the sleeve 10 and the inner wall 11 is closed off by an end ring 14, while at some distance thereabove there is provided a ring 15 having an aperture 16. Between the end ring 14 and the ring 15 there is located a space, in which the pulsator system 8 produces over the line 18 and via an aperture 17 a pulsating vacuum, thereby effecting in the space between the sleeve 10 and the inner wall 11 a pulsating vacuum which causes the inner wall 11 to close firmly around the teat, when the teat cup is properly connected thereto, respectively causes the inner wall to move outwards again, in order that there is obtained the rhythmic movement around the teat as required in the milking operation. In order to function as a buffer for the milk to be collected and to minimize the fluctuations in the vacuum under the teat, there is provided in the lower part of the teat cup a buffer space 19, in which a relatively narrow air suction aperture 20 is made for the purpose of milk transport. The line 4 serving to discharge the milk to the milk meter 3 is connected to this buffer space 19. In addition, the buffer space 19 contains a fixed element 21, which element partly projects into the aperture between the teat inner space 22 and the buffer space 19 to ensure that the milk flows gradually into the buffer space 19 and a splitting of the milk is prevented. At the upper end of the fixed element 21, there is provided a temperature-sensitive sensor 23 to perform a temperature measurement. The milk temperature, which can already be ascertained in this manner in the teat cup 2, is a good measure for the body temperature, which in case of sick cows, such as those which are affected by mastitis, is higher than normally. In a downwardly sloping part of the milk line 4 there is provided a flow sensor 24 to ascertain when the flow of milk starts and when it ends. This flow sensor operates here by establishing an electric connection between two electrodes by means of a flow of milk. The oblique position of the sensor prevents milk from remaining behind, i.e. it prevents a small quantity of milk from remaining between the electrodes, which would result in a permanent detection of a milk flow. The milk line 4 also includes a vacuum sensor 26 for ascertaining a sufficient vacuum in the milk line 4 and the teat cup 2. In the milk glass 3 there is provided a sensor 25 for ascertaining the electric conductivity in order to diagnose mastitis or an other infective disease. This sensor 25 includes a reservoir having electrodes for measuring the electric conductivity of the milk contained therein. Upon each new flow of milk, the milk present in the reservoir is replaced. In case the milk has been affected, an increased electric conductivity will be ascertained. A slight increase of the electric conductivity being detected at the start of each new flow of milk, it is also possible to ascertain by means of this mastitis sensor the start of a milk flow, instead of using a flow sensor or both sensors at the same time for the purpose. The control signals S1, S2, S3 and S4 from the respective sensors 23, 24, 25 and 26 are supplied to a computer 27, which processes the information received and renders it visible on the display screen 28. Furthermore, there is incorporated between the line 5 and the line 7 a three-way valve 29 for the purpose of discharging the milk flow from a mastitis-affected udder quarter to a waste tank 30. When, on the basis of the information received, the farmer decides to discharge milk to the waste tank 30 and gives an appropriate command to the computer, the three-way valve 29 is switched by means of a signal S5 supplied by the computer.

The signals supplied by the sensors 23, 24, 25 and 26 upon milking the subsequent animals can be averaged over a defined period of time, e.g. 24 hours, and/or over a number of animals, preferably all that are milked in the present implement. The animals being milked several times a day, this average value can be calculated each time as a progressive average. When, upon milking a specific animal, one of the said sensors indicates a value that markedly differs from the relevant average value, this will be an indication that the relevant sensor does not function properly. In the same way, average values can be defined of further signals to be deduced from combinations of signals supplied by several sensors. For example, the average value can be defined of the dead time, i.e. the time elapsed between the moment of connection of a teat cup, as established by a vacuum sensor 26, and the moment of start of the milk flow, as established by the flow sensor 24. An average value can also be defined of the milking time, i.e. the time elapsed between the start of the milk flow and the end thereof, which phenomena can both be detected with the aid of the flow sensor 24. It is also possible, in particular by means of the flow sensor 24 in combination with the defined quantity of milk collected in the milk glass 3 per milking turn, to deduce signals that are a measure for the milking rate and/or the milk yield. The values of these signals can be averaged as well. The said averaging processes are executed in the computer 27 and will all relate to a specific number of animals and/or a specific period of time. Signals supplied by one or more sensors upon milking separate animals and having a value that deviates from the relevant average value, will always be an indication that one or more sensors does/do not function properly. Such a defectiveness can be indicated by the computer 27 on an attention list, i.e. it can both be rendered visible on the display screen 28 and be printed. In addition, an alarm can be switched on, e.g. in the form of check lights to be provided on the implement. Generally speaking, the sensors being provided for the purpose of monitoring the milking process and/or the milk quality and/or the health condition of the animals, defectiveness of one or more sensors should not result in the whole process of automatic milking being interrupted. The computer programme will have to take into account that, although defectiveness of one or more sensors is ascertained, the automatic milking of the animals will have to be continued, anyway during the night. In the daytime, there may be designated periods of time, during which the automatic milking process is stopped and the defectiveness is repaired.

## Claims

1. An implement, such as an implement for automatically milking animals, such as cows, provided with at least one milking robot, with one or more sensors (23 - 26) and with one or more computers (27), characterized in that, if a signal, transmitted by one or more sensors (23 - 26), varies to a certain extent to a defined average value, the computer (27) indicates that said sensor/sensors (23 - 26) has to be regarded as being defective.

2. An implement, such as an implement as claimed in claim 1, characterized in that the computer (27) is designed in such a way that it will define an average value during a fixed period of time and/or a fixed number of animals.

3. An implement, such as an implement as claimed in claim 1 or 2, characterized in that the signals can be transmitted by one or more sensors or a combination thereof.

4. A method, such as a method of automatically milking animals, such as cows, using at least one milking robot and using one or more sensors (23 - 26), characterized in that the sensor/sensors (23 - 26) are regarded as being defective, if a signal, transmitted by the sensor/sensors (23 - 26), or a combination thereof, varies to a certain extent to a defined average.

5. A method, such as a method as claimed in claim 4, characterized in that the average value of the signals of the sensor/sensors (23 - 26), or a combination thereof, is defined during a fixed period of time and/or a fixed number of animals.

6. A method as claimed in claim 4 or 5, characterized in that the signals transmitted by the sensors (23 - 26) are capable of indicating an underpressure in one or more teat cups (2) or in lines connected thereto, and/or the milk temperature, and/or the conductivity of the milk, and/or the start and the end of the milk flow.

7. A method as claimed in any one of claims 4 - 6, characterized in that the further signals deduced from a combination of signals transmitted by the sensors (23 - 26) are capable of indicating the dead time, i.e. the time elapsed between the moment of connection of a teat cup (2) and the moment of start of the milk flow, and/or the milking time, and/or the milking rate, and/or the milk yield.

8. A method as claimed in any one of claims 4 - 7, characterized in that as sensors (23 - 26) there are used vacuum sensors (26) for detecting an underpressure in the teat cups and in the milk lines connected thereto, temperature sensors (23) for recording the milk temperature, conductivity sensors (25) for diagnosing mastitis or other infective diseases, and flow sensors (24) for ascertaining the start and the end of a milk flow.

9. A method as claimed in any one of claims 4 - 8, characterized in that from the signals obtained or the deduced further signals there is defined a 24-hours average.

## Patentansprüche

1. Vorrichtung, wie z. B. eine Vorrichtung zum automatischen Melken von Tieren, wie z. B. Kühen, mit mindestens einem Melkroboter, einem oder mehreren Sensoren (23 bis 26) und einem oder mehreren Rechnern (27),
dadurch gekennzeichnet, daß der Rechner (27) anzeigt, daß der Sensor/die Sensoren (23 bis 26) als defekt anzusehen sind, wenn ein von einem oder mehreren Sensoren (23 bis 26) übermitteltes Signal um ein bestimmtes Maß von einem vorgegebenen Mittelwert abweicht.

2. Vorrichtung, wie z. B. eine Vorrichtung nach Anspruch 1,
dadurch gekennzeichnet, daß der Rechner (27) derart ausgebildet ist, daß er während eines festgelegten Zeitraumes und/oder für eine festgelegte Anzahl von Tieren einen Mittelwert bildet.

3. Vorrichtung, wie z. B. eine Vorrichtung nach Anspruch 1 oder 2,
dadurch gekennzeichnet, daß die Signale von einem oder mehreren Sensoren oder einer Kombination derselben übermittelbar sind.

4. Verfahren, wie z. B. ein Verfahren zum automatischen Melken von Tieren, wie z. B. Kühen, bei dem mindestens ein Melkroboter und ein oder mehrere Sensoren (23 bis 26) verwendet werden,
dadurch gekennzeichnet, daß der Sensor/die Sensoren (23 bis 26) als defekt gelten, wenn ein Signal, das von dem Sensor/den Sensoren (23 bis 26) oder einer Kombination derselben übermittelt wird, um ein gewisses Maß von einem festgelegten Mittelwert abweicht.

5. Verfahren, wie z. B. ein Verfahren nach Anspruch 4,
dadurch gekennzeichnet, daß der Mittelwert der von dem Sensor/den Sensoren (23 bis 26) oder einer Kombination derselben gelieferten Signale während eines festgelegten Zeitraumes und/oder für eine festgelegte Anzahl von Tieren gebildet wird.

6. Verfahren nach Anspruch 4 oder 5,
dadurch gekennzeichnet, daß die von den Sensoren (23 bis 26) übermittelten Signale geeignet sind, einen Unterdruck in einem oder mehreren Zitzenbechern (2) oder in daran angeschlossenen Leitungen und/oder die Milchtemperatur und/oder die Leitfähigkeit der Milch und/oder den Beginn und das Ende des Milchflusses anzuzeigen.

7. Verfahren nach einem der Ansprüche 4 bis 6,
dadurch gekennzeichnet, daß die weiteren Signale, die von einer Kombination von durch die Sensoren (23 bis 26) übermittelten Signalen abgeleitet wurden, geeignet sind, die Totzeit, d. h. die zwischen dem Zeitpunkt des Anschlusses eines Zitzenbechers (2) und dem Zeitpunkt des Einsetzens des Milchflusses verstrichene Zeit, und/oder die Melkzeit und/oder die Milchdurchflußmenge und/oder den Milchertrag anzuzeigen.

8. Verfahren nach einem der Ansprüche 4 bis 7,
dadurch gekennzeichnet, daß als Sensoren (23 bis 26) Vakuumsensoren (26) zur Ermittlung eines Unterdruckes in den Zitzenbechern und den daran angeschlossenen Milchleitungen, Temperatursensoren (23) zum Aufzeichnen der Milchtemperatur, Leitfähigkeitssensoren (25) zum Diagnostizieren von Mastitis oder anderen Infektionskrankheiten sowie Strömungssensoren (24) zur Ermittlung von Beginn und Ende eines Milchflusses verwendet werden.

9. Verfahren nach einem der Ansprüche 4 bis 8,
dadurch gekennzeichnet, daß anhand der erhaltenen Signale oder der abgeleiteten weiteren Signale ein 24-Stunden-Mittelwert gebildet wird.

## Revendications

1. Dispositif tel qu'un dispositif pour la traite automatique d'animaux, tels que des vaches, muni d'au moins un robot de traite, d'un ou de plusieurs détecteurs (23-26), et d'un ou de plusieurs ordinateurs (27), caractérisé en ce que si un signal, transmis par un ou plusieurs détecteurs (23-26) varie jusqu'à un certain point par rapport à une valeur moyenne définie, l'ordinateur (27) indique que ledit détecteur/lesdits détecteurs (23-26) doivent être considérés comme étant défectueux.

2. Dispositif, tel qu'un dispositif selon la revendication 1, caractérisé en ce que l'ordinateur (27) est conçu d'une manière telle qu'il va définir une valeur moyenne pendant une période de temps fixée et/ou pour un nombre d'animaux fixé.

3. Dispositif, tel qu'un dispositif selon la revendication 1 ou 2, caractérisé en ce que les signaux peuvent être transmis par un ou plusieurs détecteurs ou par une combinaison de ceux-ci.

4. Procédé, tel qu'un procédé de traite automatique d'animaux, tels que des vaches, utilisant au moins un robot de traite et utilisant un ou plusieurs détecteurs (23-26), caractérisé en ce que le détecteur/les détecteurs (23-26) sont considérés comme étant défectueux, si un signal, transmis par le détecteur/les détecteurs (23-26) ou une combinaison de ceux-ci, varie jusqu'à un certain point par rapport à une moyenne définie.

5. Procédé, tel qu'un procédé selon la revendication 4, caractérisé en ce que la valeur moyenne des signaux du détecteur/des détecteurs (23-26) ou d'une combinaison de ceux-ci, est définie durant une période de temps établie et/ou pour un nombre d'animaux établi.

6. Procédé selon la revendication 4 ou 5, caractérisé en ce que les signaux transmis par les détecteurs (23-26) sont capables d'indiquer une sous-pression dans un ou plusieurs gobelets trayeurs ou dans des lignes connectées à ces derniers, et/ou la température du lait, et/ou la conductivité du lait, et/ou le début et la fin de l'écoulement du lait.

7. Procédé selon l'une quelconque des revendications 4 à 6, caractérisé en ce que les signaux supplémentaires déduits d'une combinaison de signaux transmis par les détecteurs (23-26) sont capables d'indiquer le temps mort, c'est-à-dire le temps écoulé entre le moment de la connexion du gobelet trayeur (2) et le moment du début de l'écoulement du lait, et/ou le temps de traite, et/ou la vitesse de traite, et/ou le rendement en lait.

8. Procédé selon l'une quelconque des revendications 4 à 7, caractérisé en ce que comme détecteurs (23-26) on utilise des détecteurs de vide (26) pour détecter une sous-pression dans les gobelets trayeurs et dans les lignes de lait reliées à ces derniers, des détecteurs de température (23) pour enregistrer la température du lait, des détecteurs de conductivité (25) pour diagnostiquer une mastite ou d'autres maladies infectieuses, et des détecteurs d'écoulement (24) pour constater le début et la fin de l'écoulement de lait.

9. Procédé selon l'une quelconque des revendications 4 à 8, caractérisé en ce qu'à partir des signaux obtenus ou des signaux supplémentaires déduits, on définit une moyenne sur 24 heures.
